# EUROPÄISCHE PATENTSCHRIFT

(11) **EP 2 690 308 B1**
(45) Veröffentlichungstag und Bekanntmachung des Hinweises auf die Patenterteilung: **24.07.2019**
(21) Anmeldenummer: 13173583.9
(22) Anmeldetag: 25.06.2013
(51) Int. Cl.: F16F 9/54, F16F 9/19, F16F 9/06, B60G 13/00

(54) **Dämpfungselement**
Damping element
Elément d'amortissement

(30) Priorität: 26.07.2012 DE 102012213167
(43) Veröffentlichungstag der Anmeldung: 29.01.2014
(73) Patentinhaber: ZF Friedrichshafen AG, 88046 Friedrichshafen (DE)
(72) Erfinder: Zietsch, Andreas, 97532 Üchtelhausen (DE); Schultheiss, Ines, 97456 Dittelbrunn (DE)

(56) Entgegenhaltungen:
- EP-A1- 1 850 030
- DE-A1- 19 750 414
- DE-B3- 10 348 315
- DE-C1- 4 420 134
- US-A1- 2005 023 093
- US-B1- 6 220 408

## Beschreibung

Die Erfindung bezieht sich auf ein Dämpfungselement insbesondere für ein Fahrzeug, das zwischen zwei Massen anordenbar ist, mit einem Zylinder, in dem ein Kolben verschiebbar angeordnet ist, der den Innenraum des Zylinders in eine erste Zylinderkammer und eine zweite Zylinderkammer unterteilt, die mit einem Hydraulikmedium gefüllt sind, mit einer Drosselverbindung zwischen der ersten und der zweiten Zylinderkammer, mit einer einseitig an dem Kolben angeordnete Kolbenstange, die koaxial durch die erste Zylinderkammer und abgedichtet aus dem Zylinder herausgeführt ist und an ihrem aus dem Zylinder herausragenden Ende ein erstes Befestigungsmittel zur Befestigung an einer ersten Masse aufweist, wobei an dem dem kolbenstangenseitigen Ende entgegengesetzten Ende des Zylinders ein als Hohlkörper ausgebildetes Verbindungselement mit seinem einen Ende befestigt ist, dessen Erstreckung von einer zum Zylinder koaxialen Erstreckung abweicht und dessen anderes Ende ein zweites Befestigungsmittel zur Befestigung an einer zweiten Masse aufweist, dessen Innenraum mit der zweiten Zylinderkammer verbunden und dessen das zweite Befestigungsmittel aufweisende Ende verschlossen ist, wobei zwischen der zweiten Zylinderkammer und dem Innenraum des Verbindungselements ein beweglicher Trennkolben angeordnet ist, der den mit Hydraulikmedium gefüllten Bereich der zweiten Zylinderkammer von einem mit einem unter Vordruck stehenden kompressiblen Medium gefüllten Bereich des Verbindungselements trennt.

Derartige Dämpfelemente werden z.B. bei Fahrzeugen zwischen einer ersten Masse, nämlich der von Schwingungen freizuhaltenden Fahrgastzelle und einer zweiten Masse, nämlich den bei einem Fahrbetrieb unter Schwingungen stehenden Rädern bzw. des Fahrwerkes eingesetzt. Das Dämpfungselement ist mittels der Kolbenstange z.B. mit der ersten Masse und mittels eines Befestigungsmittels mit der zweiten Masse verbunden. Das Problem des Verbindungselements besteht darin, dass es häufig sich nicht koaxial zum Zylinder erstrecken kann, sondern im eingebauten Zustand um andere Bauteile herumgeführt werden muss. Bei bekannten Dämpfelementen ist das Verbindungselement ein Zylinderrohr, das sich unter einem Winkel zur Längsachse des Zylinders erstreckt und an dessen Seitenbereich das zweite Befestigungsmittel befestigt ist. Der Trennkolben ist in dem Verbindungselement verschiebbar angeordnet. Dadurch kann nur ein Teil der Länge des Zylinderrohres mit dem kompressiblen Medium gefüllt sein. Dieses kleine Volumen an kompressiblem Medium führt zu einer relativ steilen und damit unkomfortablen Federkennlinie der durch dieses Volumen gebildeten Gasfeder.

Das Dokument DE 197 50 414 A1 offenbart ein Dämpfungselement gemäß dem Oberbegriff des Patentanspruchs 1. Das Dokument EP 1 850 030 A1 offenbart ebenfalls ein gattungsgemäßes Dämpfungselement.

Aufgabe der Erfindung ist es daher ein Dämpfungselement der eingangs genannten Art zu schaffen, das auf einfache Weise die genannten Nachteile vermeidet und bei einer nicht koaxialen Erstreckung des Verbindungselements eine flachere Federkennlinie des Volumens an kompressiblem Mediums ermöglicht.

Diese Aufgabe wird erfindungsgemäß dadurch gelöst, dass das Verbindungselement an seinem dem Zylinder zugewandten Endbereich einen Rohrquerschnitt aufweist, der einen dem Innendurchmesser des Zylinders entsprechenden Außendurchmesser besitzt und in den Zylinder eingesetzt sowie mit diesem dicht und fest verbunden ist, wobei der Trennkolben in dem Zylinder koaxial verschiebbar angeordnet und seine Verschiebbarkeit zum Endbereich des Zylinders durch die Stirnseite des Endbereichs des Verbindungselements begrenzt ist.

Durch diese Ausbildung steht für das kompressible Medium wie z.B. ein Gas der gesamte Innenraum des Verbindungselements sowie noch ein Teil des Innenraums des Zylinders zur Verfügung. Dieses relativ große Volumen an kompressiblem Medium führt zu einer flacheren Federkennlinie und einem geringeren Einfluss über große Temperaturbereiche dieser Gasfeder.

Gleichzeitig ist die Anordnung und dichte Verbindung des Verbindungselements mit dem Zylinder einfach herstellbar, wobei die Stirnseite des in den Zylinder hineinragenden Endbereichs des Verbindungselements gleichzeitig einem Endanschlag für den maximalen Hub des Trennkolbens in seine eine Bewegungsrichtung bildet.

Das Verbindungselement kann je nach den Einbaubedingungen geformt sein und muss sich weder ganz noch teilweise gerade erstrecken.

Ist dabei die Stirnseite des in den Zylinder hineinragenden Endbereichs des Verbindungselements rechtwinklig zur Längsachse des Zylinders ausgerichtet, wird bei einem Anschlagen des Trennkolbens an diese Stirnseite ein Verkanten des Trennkolbens vermieden.

Ist die Stirnseite des dem zweiten Befestigungsmittel zugewandten Endes des Verbindungselements rechtwinklig zur Längsachse des Zylinders ausrichtet, so ist auf einfache Weise eine lagegenaue Befestigung des zweiten Befestigungsmittels möglich.

Dabei kann das zweite Befestigungsmittel gleichzeitig einen Verschluss des Innenraums des Verbindungselements bilden.

Vorzugsweise weist der dem Zylinder zugewandte Endbereich und/oder der dem zweiten Befestigungsmittel zugewandte Endbereich einen runden Querschnitt auf.

Eine koaxiale Belastung des Zylinders wird dadurch erreicht und ein Biegemoment auf den Zylinder wird dadurch vermieden, dass das erste und das zweite Befestigungsmittel koaxial zur der Längsachse des Zylinders angeordnet sind.

Das Verbindungselement kann in seinem Bereich zwischen dem dem Zylinder zugewandten Endbereich und dem zweiten Befestigungsmittel einen ganz oder teilweise von einer Zylinderform abweichenden Querschnitt aufweisen und damit den vorhandenen Einbauverhältnissen angepasst sein.

Eine kostengünstig herstellbare Möglichkeit besteht darin, dass das Verbindungselement ein bogenartig verformtes Rohr ist.

Eine einfache und dichte Möglichkeit zur Verbindung des Verbindungselements mit dem Zylinder besteht darin, dass das Verbindungselement an seinem dem Zylinder zugewandten, einen Rohrquerschnitt aufweisenden Endbereich mit dem Zylinder verschweißt ist.

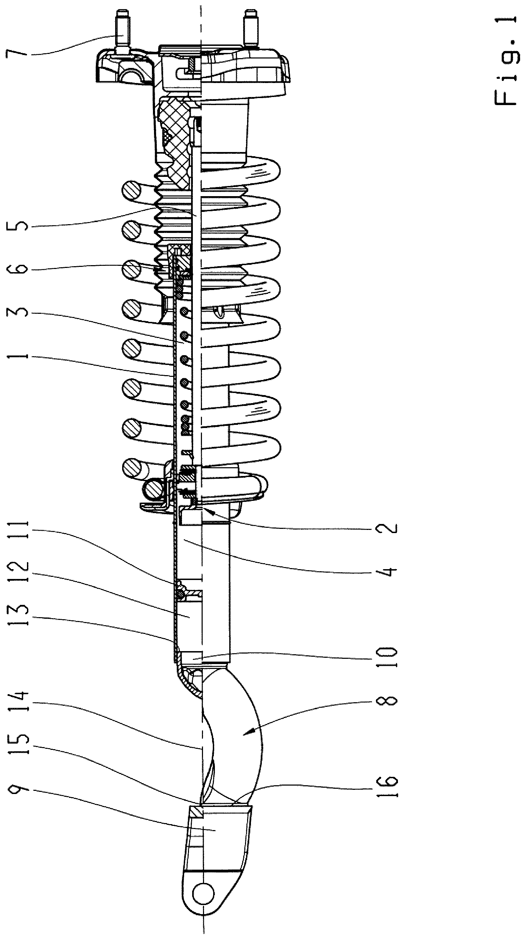

Ein Ausführungsbeispiel der Erfindung ist in der Zeichnung dargestellt und wird im Folgenden näher beschrieben. Es zeigen
- Figur 1: eine Seitenansicht eines Dämpfungselements im Halbschnitt

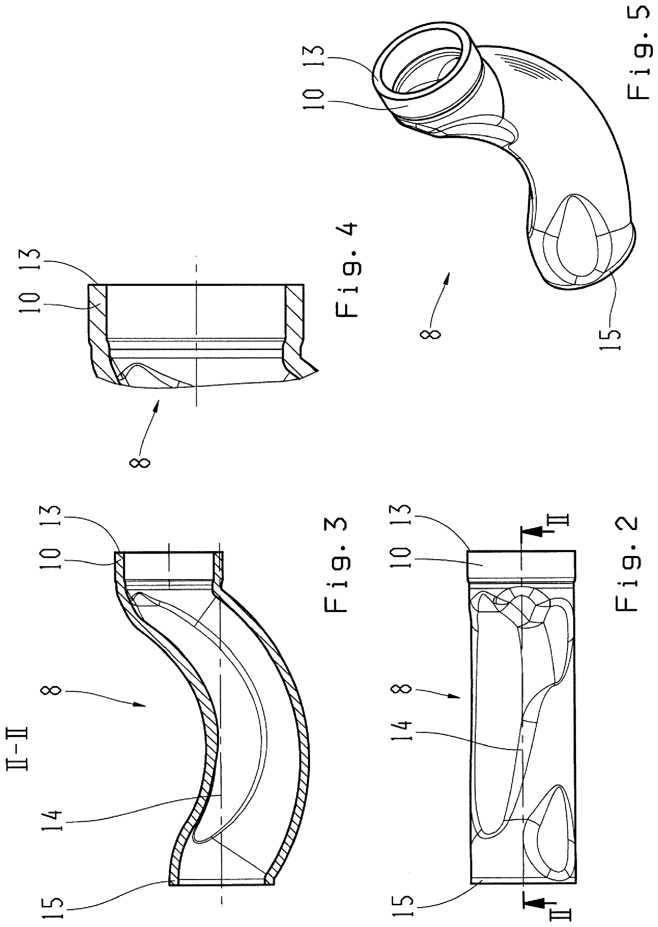

- Figur 2: eine Draufsicht eines Verbindungselements des Dämpfungselements nach Figur 1
- Figur 3: eine Schnittansicht des Verbindungselements nach Figur 2 entlang der Linie II-II
- Figur 4: eine vergrößerte Darstellung des dem Zylinder zugewandten Endbereichs des Verbindungselements nach Figur 3
- Figur 5: eine perspektivische Darstellung des Verbindungselements nach Figur 2.

Das dargestellte Dämpfungselement ist ein Einrohrdämpfer und weist einen Zylinder 1 auf, dessen Innenraum von einem axial verschiebbaren Kolben 2 in eine erste Zylinderkammer 3 und eine zweite Zylinderkammer 4 unterteilt ist, die beide mit Hydrauliköl gefüllt sind. Einseitig ist an dem Kolben 2 eine Kolbenstange 5 befestigt, die koaxial durch die erste Zylinderkammer 3 und durch eine die erste Zylinderkammer 3 axial nach außen verschließende Führungs- und Dichtungseinheit 6 nach außen geführt ist.

Mit ihrem äußeren freien Ende ist die Kolbenstange mit einem ersten Befestigungsmittel 7 verbunden, das an einer ersten Masse nämlich einer Karosseriemasse oder einer Radmasse eines Fahrzeugs verbindbar ist.

In dem Kolben 2 sind nicht dargestellte Drosseln angeordnet, durch die Hydrauliköl von der ersten zur zweiten Zylinderkammer 3 und 4 und umgekehrt strömen kann.

An dem dem ersten Befestigungsmittel 7 entgegengesetzten Ende des Zylinders 1 ist ein Verbindungselement 8 angeordnet, welches wiederum an seinem dem Zylinder 1 entgegengesetzten Ende ein zweites Befestigungsmittel 9 trägt.

Das Verbindungselement 8 besteht aus einem bogenartig verformten Rohr, das an seinem dem Zylinder 1 zugewandten Endbereich 10 einen runden Rohrquerschnitt besitzt, der sich koaxial zum Zylinder 1 erstreckt. Dieser Endbereich 10 weist einen Außendurchmesser auf, der dem Innendurchmesser des Zylinders 1 entspricht und ist in den Zylinder 1 eingeschoben und durch eine Schweißverbindung mit dem Zylinder 1 fest und dicht verbunden.

Der vom Kolben 2 aus dem Verbindungselement 8 zugewandte Teil des Zylinders 1 ist von einem verschiebbaren Trennkolben 11 unterteilt, der die zweite Zylinderkammer 4 von einem mit Gas gefüllten Gasraum 12 trennt. Der Gasraum 12 besteht aus dem dem Verbindungselement 8 zugewandten Endbereich des Zylinders 1 und dem damit verbundenen Innenraum des Verbindungselements 8 und bildet einen Ausgleichsraum für das um das Kolbenstangenvolumen größere Verdrängungsvolumen der zweiten Zylinderkammer 4.

Die sich rechtwinklig zur Längsachse 14 des Zylinders erstreckende Stirnseite 13 des in den Zylinder 1 ragenden Endbereichs 10 des Verbindungselements 8 bildet einen Anschlag, der den maximalen Auswärtshub des Trennkolbens 11 begrenzt.

Der dem Zylinder 1 abgewandte Endbereich 15 des Verbindungselements 8 erstreckt sich ebenfalls rechtwinklig zur Längsachse 14 des Zylinders 1 und ist von einem aufgeschweißten plattenartigen Teil 16 des zweiten Befestigungsmittels 9 verschlossen. Dieses zweite Befestigungsmittel 9 ist mit einer zweiten Masse, nämlich einer Radmasse oder einer Karosseriemasse eines Fahrzeugs verbindbar.

Die Kraftbeaufschlagung der ersten und zweiten Befestigungsmittel 7, 9 erfolgt koaxial zur Längsachse 14 des Zylinders 1.

### Bezugszeichen

- 1: Zylinder
- 2: Kolben
- 3: erste Zylinderkammer
- 4: zweite Zylinderkammer
- 5: Kolbenstange
- 6: Führungs- und Dichtungseinheit
- 7: erstes Befestigungsmittel
- 8: Verbindungselement
- 9: zweites Befestigungsmittel
- 10: Endbereich
- 11: Trennkolben
- 12: Gasraum
- 13: Stirnseite
- 14: Längsachse
- 15: Endbereich
- 16: Teil

## Patentansprüche

1. Dämpfungselement insbesondere für ein Fahrzeug, das zwischen zwei Massen anordenbar ist, mit einem Zylinder, (1) in dem ein Kolben (2) verschiebbar angeordnet ist, der den Innenraum des Zylinders (1) in eine erste Zylinderkammer (3) und eine zweite Zylinderkammer (4) unterteilt, die mit einem Hydraulikmedium gefüllt sind, mit einer Drosselverbindung zwischen der ersten und der zweiten Zylinderkammer, (3, 4) mit einer einseitig an dem Kolben (2) angeordnete Kolbenstange (5), die koaxial durch die erste Zylinderkammer (3) und abgedichtet aus dem Zylinder (1) herausgeführt ist und an ihrem aus dem Zylinder (1) herausragenden Ende ein erstes Befestigungsmittel (7) zur Befestigung an einer ersten Masse aufweist, wobei an dem dem kolbenstangenseitigen Ende entgegengesetzten Ende des Zylinders (1) ein als Hohlkörper ausgebildetes Verbindungselement (8) mit seinem einen Ende befestigt ist, dessen Erstreckung von einer zum Zylinder (1) koaxialen Erstreckung abweicht und dessen anderes Ende ein zweites Befestigungsmittel (9) zur Befestigung an einer zweiten Masse aufweist, dessen Innenraum mit der zweiten Zylinderkammer (4) verbunden und dessen das zweite Befestigungsmittel (9) aufweisende Ende verschlossen ist, wobei zwischen der zweiten Zylinderkammer (4) und dem Innenraum des Verbindungselements (8) ein beweglicher Trennkolben (11) angeordnet ist, der den mit Hydraulikmedium gefüllten Bereich der zweiten Zylinderkammer (4) von einem mit einem unter Vordruck stehenden kompressiblen Medium gefüllten Bereich des Verbindungselements (8) trennt, wobei der Trennkolben (11) in dem Zylinder (1) koaxial verschiebbar angeordnet und seine Verschiebbarkeit zum Endbereich des Zylinders (1) durch die Stirnseite (13) des Endbereichs (10) des Verbindungselements (8) begrenzt ist, **dadurch gekennzeichnet, dass** das Verbindungselement (8) an seinem dem Zylinder (1) zugewandten Endbereich (10) einen Rohrquerschnitt aufweist, der einen dem Innendurchmesser des Zylinders (1) entsprechenden Außendurchmesser besitzt und in den Zylinder (1) eingesetzt sowie mit diesem dicht und fest verbunden ist.

2. Dämpfungselement nach Anspruch 1, **dadurch gekennzeichnet, dass** die Stirnseite (13) des in den Zylinder (1) hineinragenden Endbereichs (10) des Verbindungselements (8) rechtwinklig zur Längsachse (14) des Zylinders (1) ausgerichtet ist.

3. Dämpfungselement nach einem der vorhergehenden Ansprüche, **dadurch gekennzeichnet, dass** die Stirnseite des dem zweiten Befestigungsmittel (9) zugewandten Endes des Verbindungselements (8) rechtwinklig zur Längsachse (14) des Zylinders (1) ausrichtet ist.

4. Dämpfungselement nach einem der vorhergehenden Ansprüche, **dadurch gekennzeichnet, dass** das erste und das zweite Befestigungsmittel (7, 9) koaxial zur der Längsachse (14) des Zylinders (1) angeordnet sind.

5. Dämpfungselement nach einem der vorhergehenden Ansprüche, **dadurch gekennzeichnet, dass** das Verbindungselement (8) in seinem Bereich zwischen dem dem Zylinder (1) zugewandten Endbereich (10) und dem zweiten Befestigungsmittel (9) einen ganz oder teilweise von einer Zylinderform abweichenden Querschnitt aufweist.

6. Dämpfungselement nach einem der vorhergehenden Ansprüche, **dadurch gekennzeichnet, dass** das Verbindungselement (8) ein bogenartig verformtes Rohr ist.

7. Dämpfungselement nach einem der vorhergehenden Ansprüche, **dadurch gekennzeichnet, dass** das Verbindungselement (8) an seinem dem Zylinder (1) zugewandten, einen Rohrquerschnitt aufweisenden Endbereich (10) mit dem Zylinder (1) verschweißt ist.

## Claims

1. Damping element, in particular for a vehicle, which can be arranged between two masses, with a cylinder (1) in which there is displaceably arranged a piston (2) that divides the interior of the cylinder (1) into a first cylinder chamber (3) and a second cylinder chamber (4), which chambers are filled with a hydraulic medium, with a throttle connection between the first and second cylinder chambers (3, 4), with, arranged on one side of the piston (2), a piston rod (5) which is guided coaxially through the first cylinder chamber (3) and in a sealed manner out of the cylinder (1) and has, at its end projecting out of the cylinder (1), a first attachment means (7) for attaching to a first mass, wherein at that end of the cylinder (1) that is opposite the piston-rod-side end there is attached, by one end, a connection element (8) in the form of a hollow body, the extent of which deviates from an extent coaxial with the cylinder (1), and whose other end has a second attachment means (9) for attaching to a second mass, whose interior is connected to the second cylinder chamber (4) and whose end having the second attachment means (9) is closed, wherein between the second cylinder chamber (4) and the interior of the connection element (8) there is arranged a movable separating piston (11) which separates that region of the second cylinder chamber (4) that is filled with hydraulic medium from a region of the connection element (8) that is filled with a pressurized compressible medium, wherein the separating piston (11) is arranged in the cylinder (1) so as to be coaxially displaceable and its displaceability is limited at the end region of the cylinder (1) by the end (13) of the end region (10) of the connection element (8),
**characterized in that** the connection element (8) has, at its end region (10) oriented towards the cylinder (1), a tubular cross section which has an outer diameter corresponding to the inner diameter of the cylinder (1), and is inserted into the cylinder (1) and is joined thereto in a sealing and secure manner.

2. Damping element according to Claim 1, **characterized in that** the end face (13) of the end region (10), which projects into the cylinder (1), of the connection element (8) is oriented at right angles to the longitudinal axis (14) of the cylinder (1).

3. Damping element according to either of the preceding claims, **characterized in that** the end face of the end, oriented towards the second attachment means (9), of the connection element (8) is oriented at right angles to the longitudinal axis (14) of the cylinder (1).

4. Damping element according to one of the preceding claims, **characterized in that** the first and the second attachment means (7, 9) are arranged coaxially with the longitudinal axis (14) of the cylinder (1).

5. Damping element according to one of the preceding claims, **characterized in that** the connection element (8), in its region between the end region (10), oriented towards the cylinder (1), and the second attachment means (9), has a cross section that deviates entirely or partially from a cylinder shape.

6. Damping element according to one of the preceding claims, **characterized in that** the connection element (8) is a tube that has been bent into an arc.

7. Damping element according to one of the preceding claims, **characterized in that** the connection element (8), at its end region (10) that is oriented towards the cylinder (1) and has a tubular cross section, is welded to the cylinder (1).

## Revendications

1. Elément d'amortissement, en particulier pour un véhicule, qui peut être disposé entre deux masses, comprenant un cylindre (1) dans lequel un piston (2) est disposé de manière déplaçable, lequel divise l'espace interne du cylindre (1) en une première chambre de cylindre (3) et une deuxième chambre de cylindre (4), lesquelles sont remplies d'un fluide hydraulique, comprenant une liaison d'étranglement entre la première et la deuxième chambre de cylindre (3, 4) avec une tige de piston (5) disposée d'un côté au niveau du piston (2), laquelle est guidée coaxialement à travers la première chambre de cylindre (3) et de manière étanchéifiée hors du cylindre (1) et présente, à son extrémité sortant du cylindre (1), un premier moyen de fixation (7) pour la fixation à une première masse, un élément de liaison (8) réalisé sous forme de corps creux étant fixé par l'une de ses extrémités à l'extrémité du cylindre (1) opposée à l'extrémité du côté de la tige de piston, son étendue s'écartant d'une étendue coaxiale au cylindre (1) et son autre extrémité présentant un deuxième moyen de fixation (9) pour la fixation à une deuxième masse, dont l'espace interne est connecté à la deuxième chambre de cylindre (4) et dont l'extrémité présentant le deuxième moyen de fixation (9) est fermée, un piston de séparation mobile (11) étant disposé entre la deuxième chambre de cylindre (4) et l'espace interne de l'élément de liaison (8), lequel sépare la région de la deuxième chambre de cylindre (4) remplie de fluide hydraulique d'une région de l'élément de liaison (8) remplie d'un milieu compressible soumis à une pré-pressurisation, le piston de séparation (11) étant disposé de manière déplaçable coaxialement dans le cylindre (1) et sa mobilité étant limitée vers la région d'extrémité du cylindre (1) par le côté frontal (13) de la région d'extrémité (10) de l'élément de liaison (8),
**caractérisé en ce que** l'élément de liaison (8) présente, au niveau de sa région d'extrémité (10) tournée vers le cylindre (1), une section transversale tubulaire qui possède un diamètre extérieur correspondant au diamètre intérieur du cylindre (1) et qui est insérée dans le cylindre (1) et est connectée à celui-ci de manière étanche et fixe.

2. Élément d'amortissement selon la revendication 1, **caractérisé en ce que** le côté frontal (13) de la région d'extrémité (10) de l'élément de liaison (8) pénétrant dans le cylindre (1) est orienté à angle droit par rapport à l'axe longitudinal (14) du cylindre (1).

3. Élément d'amortissement selon l'une quelconque des revendications précédentes, **caractérisé en ce que** le côté frontal de l'extrémité de l'élément de liaison (8) tournée vers le deuxième moyen de fixation (9) est orienté à angle droit par rapport à l'axe longitudinal (14) du cylindre (1).

4. Élément d'amortissement selon l'une quelconque des revendications précédentes, **caractérisé en ce que** le premier et le deuxième moyen de fixation (7, 9) sont disposés coaxialement par rapport à l'axe longitudinal (14) du cylindre (1).

5. Élément d'amortissement selon l'une quelconque des revendications précédentes, **caractérisé en ce que** l'élément de liaison (8) présente, dans sa région entre la région d'extrémité (10) tournée vers le cylindre (1) et le deuxième moyen de fixation (9), une section transversale s'écartant complètement ou partiellement d'une forme cylindrique.

6. Élément d'amortissement selon l'une quelconque des revendications précédentes, **caractérisé en ce que** l'élément de liaison (8) est un tube de forme arquée.

7. Élément d'amortissement selon l'une quelconque des revendications précédentes, **caractérisé en ce que** l'élément de liaison (8) est soudé au cylindre (1) au niveau de sa région d'extrémité (10) tournée vers le cylindre (1), présentant une section transversale tubulaire.
